# FASCICULE DE BREVET EUROPEEN

(11) **EP 4 143 424 B1**
(45) Date de publication et mention de la délivrance du brevet: **25.03.2026**
(21) Numéro de dépôt: 21718571.9
(22) Date de dépôt: 13.04.2021
(51) Int. Cl.: F01P 11/08, F16H 57/04

(54) **PROCEDE ET DISPOSITIF DE CONTROLE THERMIQUE DE BOITE DE VITESSES**
VERFAHREN UND VORRICHTUNG ZUR THERMISCHEN REGELUNG EINES GETRIEBES
THERMAL CONTROL METHOD AND DEVICE FOR A GEARBOX

(30) Priorité: 30.04.2020 FR 2004347
(43) Date de publication de la demande: 08.03.2023
(73) Titulaire: Horse Powertrain Solutions, S.L.U., 28108 Alcobendas (Madrid) (ES)
(72) Inventeur: MERCAY, Patrice, 78180 Montigny le bretonneux (FR); FERREIRA, Remi, 92100 BOULOGNE BILLANCOURT (FR); LAVOUE, Brendan, 78000 Versailles (FR); LE-BOUETTE, Julien, 78000 VERSAILLES (FR); PONT, Mathieu, 78000 VERSAILLES (FR)
(74) Mandataire: Elzaburu S.L.P.
(86) Numéro de dépôt international: PCT/EP2021/059550
(87) Numéro de publication internationale: WO 2021/219364

(56) Documents cités:
- EP-A1- 2 687 757
- WO-A1-88/06678
- DE-U1- 202005 005 452
- GB-A- 2 387 206
- US-B1- 6 997 238

## Description

La présente invention se rapporte au contrôle thermique des boîtes de vitesses, en vue d'assurer le maintien de l'huile de lubrification circulant à l'intérieur de la boîte, dans une plage de température optimale.

Plus précisément, elle a pour objet un procédé de contrôle thermique de boîte de vitesses à lubrification par barbotage et projection d'huile dans son carter.

Cette invention trouve son application sur tout véhicule électrique, thermique ou hybride, dont la source motrice dispose d'un circuit de refroidissement, et dont la boîte de vitesses est lubrifiée par barbotage. La source motrice concernée peut être un moteur thermique, et/ou des machines électriques.

En dessous de 90°C l'huile de boîte, en particulier de boîte manuelle ou robotisée à arbres parallèles, doit être réchauffée.

On tire profit de la dynamique thermique des machines de traction associées à la boîte au sein du GMP (groupe motopropulseur),pour accélérer sa montée en température. Cette dynamique permet de diminuer les pertes par frottement (cisaillement du lubrifiant) dans la boîte, en profitant d'une viscosité plus faible de l'huile.

Si la température d'huile de la boîte est supérieure à 90°C, elle doit au contraire d'être refroidie. Lorsque la température du liquide de refroidissement du moteur devient moins élevée que celle de l'huile de boîte, il peut contribuer à contenir l'élévation de température de la boîte, en prélevant des calories dans l'huile. L'objectif est de préserver la fiabilité des composants de la boîte, en leur évitant une température trop élevée. L'épaisseur des films d'huile et les caractéristiques mécaniques des différents composants, peuvent ainsi être préservés, pour assurer toutes les prestations fonctionnelles requises.

La boîte de vitesses est refroidie en premier lieu par l'air circulant dans le compartiment moteur, autour des carters. Par défaut, ce mode de refroidissement est le plus utilisé dans les boîtes mécaniques. Pour refroidir l'huile de boîte, on peut aussi utiliser un échangeur huile/eau à l'extérieur de la boîte. C'est généralement un échangeur à lames, dans lequel les deux fluides (huile de boîte et fluide de refroidissement du moteur) circulent pour échanger leurs calories. Cet agencement requiert une pompe à huile suffisamment puissante pour vaincre les pertes de charge occasionnées par la circulation de l'huile au travers de chacune des lames de l'échangeur. L'échangeur à lames est généralement fixé sur la paroi extérieure du carter d'embrayage. La pompe à huile peut être implantée à l'intérieur de la boîte (montage « add-in ») ou à l'extérieur de celle-ci (montage « add-on »).

Par la publication FR 3059610, on connaît un dispositif de contrôle d'échanges de calories entre une boîte de vitesses manuelle, et un fluide caloporteur du GMP. Dans ce dispositif, le fluide caloporteur circule au travers d'un échangeur de chaleur tubulaire se déployant à l'intérieur de la boîte. L'accès du fluide caloporteur à l'échangeur est contrôlé pour éviter, selon les circonstances, une réduction du potentiel de refroidissement du moteur thermique, ou un ralentissement de sa montée en température et de celle de l'habitacle.

Toutefois, dans ce dispositif, l'échangeur de chaleur est constitué d'un simple tube de type serpentin, dont la surface d'échange est limitée.

Par la publication US 6997238 B1, on connaît un ensemble de boîte de vitesses comprenant un carter définissant une cavité destinée à loger des engrenages d'un appareil entraîné par un moteur, le carter comportant au moins une surface extérieure sensiblement plate destinée à recevoir une plaque de refroidissement, et une plaque de refroidissement montée sur le carter au niveau de la surface extérieure sensiblement plate, la plaque de refroidissement étant isolée de la cavité par la surface extérieure plate, la plaque de refroidissement comportant un canal destiné à recevoir un liquide pour refroidir le carter et au moins un orifice en communication avec le canal. Au moins un autre mode de réalisation comprend un ensemble de boîte de vitesses dans lequel le canal est aligné avec la surface extérieure pour fournir du liquide en contact avec la surface. Cette invention comprend également une plaque de refroidissement destinée à être fixée sur une surface extérieure fermée d'une boîte de vitesses afin de fournir un liquide de refroidissement en contact avec la surface de la boîte de vitesses pour refroidir la boîte de vitesses.

La présente invention vise à optimiser les échanges thermiques entre le liquide de refroidissement et l'huile au sein de la boîte.

Elle repose sur des échanges thermiques convectifs réalisés à l'intérieur de la boîte, entre l'huile s'écoulant par gravité dans celle-ci sans circulation forcée, et un liquide de refroidissement externe.

De préférence, le liquide de refroidissement est prélevé sur un circuit de refroidissement du groupe motopropulseur auquel appartient la boîte de vitesses. Le liquide de refroidissement peut être prélevé indifféremment, sur l'un des circuits de refroidissement du GMP, comme celui du moteur thermique, d'une machine électrique.

Le dispositif proposé comprend un échangeur thermique par convection, disposé à l'intérieur de la boîte, qui assure un transfert de calories entre l'huile s'écoulant par gravité dans celle-ci sans circulation forcée, et le liquide de refroidissement du groupe motopropulseur auquel appartient la boîte de vitesses. L'échangeur est implanté directement dans la fonte d'un élément de carter de la boîte en formant dans celle-ci un réseau de circulation pour le liquide de refroidissement, qui assure un transfert de calories entre l'huile s'écoulant par gravité dans celle-ci sans circulation forcée, et le liquide de refroidissement du groupe motopropulseur. L'échangeur thermique par convection est composé d'un circuit d'eau intégré à la fonderie du carter et d'une plaque de fermeture, rapportée sur une face intérieure du carter de la boîte, qui referme l'échangeur, de sorte que le transfert de calories entre le liquide de refroidissement et l'huile, s'effectue principalement au travers de la plaque de fermeture.

La présente invention sera mieux comprise à la lecture de la description suivante d'un mode de réalisation non limitatif de celle-ci, en se reportant aux dessins annexés.
[Fig. 1] est un schéma de principe du contrôle thermique d'huile de boîte.
[Fig. 2A] montre l'implantation du dispositif proposé.
[Fig. 2B] également.
[Fig. 3A] montre la structure du dispositif proposé.
[Fig. 3B] également.
[Fig. 3C] également.
[Fig. 4A] en illustre un premier mode de réalisation.
[Fig. 4B] en illustre un deuxième mode de réalisation.
[Fig. 4C] en illustre un troisième mode de réalisation.
[Fig. 4D] en illustre un quatrième mode de réalisation.
[Fig. 4E] en illustre un cinquième mode de réalisation.

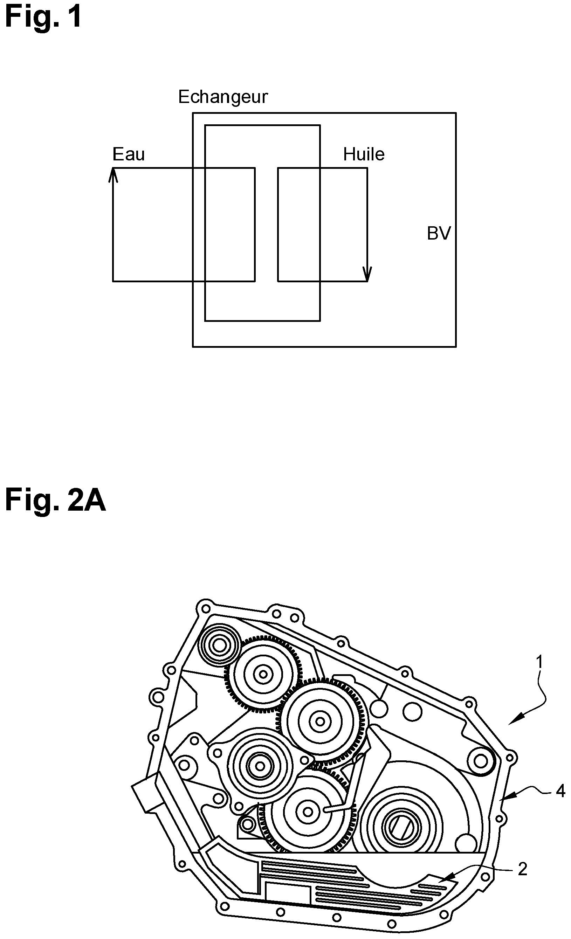

Le procédé de contrôle thermique de boîte de vitesses 1 à lubrification par barbotage et projection d'huile dans son carter de l'invention, répond au principe fonctionnel de la figure 1, selon lequel le liquide de refroidissement du moteur (eau) est introduit dans la boîte 1, où il circule l'intérieur d'un échangeur 2, pour échanger des calories avec l'huile. Il repose sur des échanges thermiques convectifs réalisés à l'intérieur de la boîte, entre l'huile s'écoulant par gravité dans celle-ci sans circulation forcée, et un liquide de refroidissement externe.

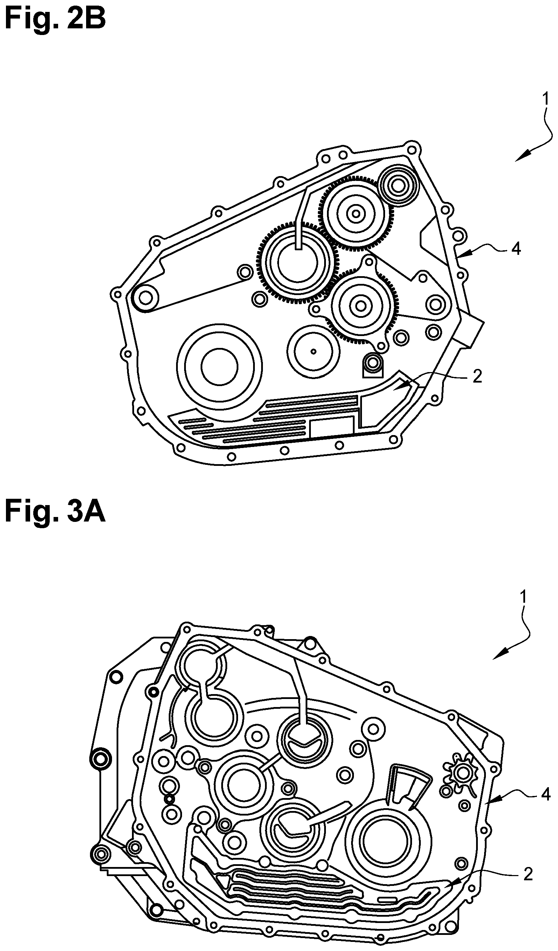

Le dispositif proposé comporte un échangeur thermique eau/huile 2, interne à la boîte 1. Selon l'invention, l'échangeur 2 est implanté directement dans la fonte d'un élément de carter de boîte, au contact de l'huile. Cette implantation lui permet d'échanger des calories avec l'huile de boîte, au repos (figure 2A), et en fonctionnement (Figure 2B). Le liquide de refroidissement est prélevé sur un circuit de refroidissement, du groupe motopropulseur auquel appartient la boîte de vitesses 1.

En fonctionnement, le mouvement de l'huile est « forcé » puisque l'huile est projetée dans la boîte par ses parties tournantes. Il est également « naturel », dans la mesure où la lubrification s'effectue par projection et ruissellement, sans l'intervention d'une pompe à huile.

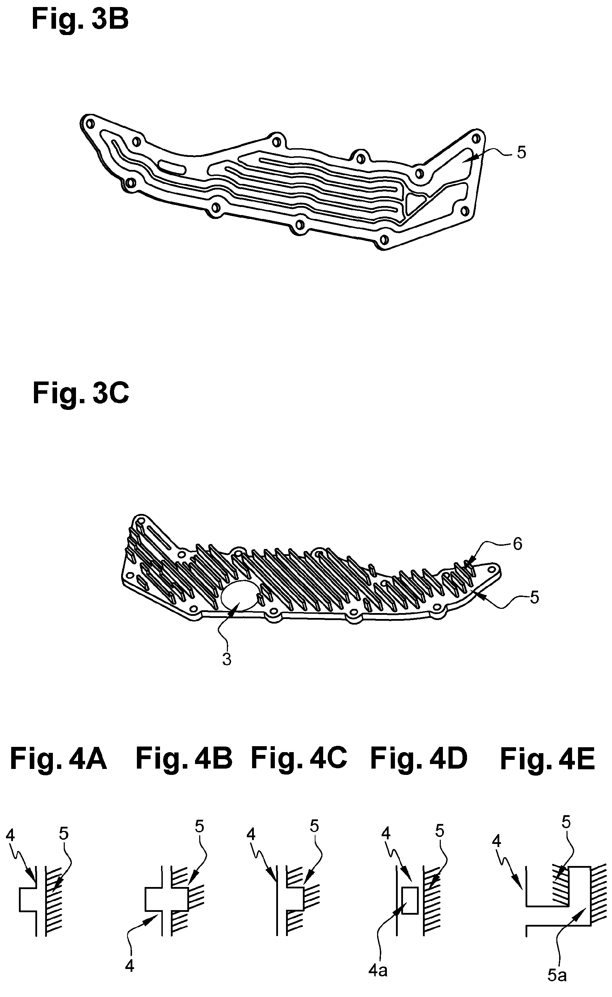

Le liquide de refroidissement circule dans l'échangeur thermique 2 intégré à la boîte de vitesses 1. Selon l'invention, l'échangeur est composé d'un circuit d'eau intégré à la fonderie du carter 4, montré sur la figure 3A, et d'une plaque ou capot 5 de fermeture, rapportée sur une face intérieure du carter 4 de la boîte 1, qui referme l'échangeur. Le transfert de calories entre le liquide de refroidissement et l'huile, s'effectue principalement au travers de la plaque 5. Elle est vue de l'intérieur de l'échangeur 1 sur la figure 3B, et de l'extérieur sur la figure 3C. Dans cet exemple, la plaque 5 intègre une partie du réseau selon un dessin complémentaire à celui du carter 4. Sur sa face extérieure, en contact avec l'huile, la plaque 5 peut intégrer des excroissances 6, telles que des ailettes, disposées dans le flux d'huile, grâce auxquelles il dispose d'une surface d'échange thermique maximisée.

Les ailettes 6, augmentent l'échange thermique avec l'huile. La plaque 5 peut supporter sur sa face extérieure un aimant servant à capter les particules métalliques véhiculées par l'huile de la boîte. La plaque 5 présente à cet effet un logement 3, apte à recevoir un aimant de captation (non représenté) de particules métalliques.

Selon l'invention, l'échangeur 2 est intégré à la fonderie du carter 4 et à la plaque de fermeture 5, en formant un réseau de circulation pour le liquide de refroidissement provenant du circuit d'eau des moteurs du véhicule. La plaque 5 est au contact de l'huile qui circule grâce à la dynamique créée par le différentiel. Grâce à l'échangeur 2, le liquide de refroidissement du moteur thermique et/ou de la machine électrique du véhicule circule à l'intérieur de la boîte et échange des calories avec l'huile, sans se mélanger à celle-ci.

Différents modes de réalisation non limitatifs, de l'échangeur 2 , sont illustrés Les figures 4A à 4E : a) figure 4A : le circuit du liquide de refroidissement est formé dans la masse du carter 4, et fermé par une plaque 5 lisse ; b) figure 4B : le circuit du liquide de refroidissement est formé dans la masse du carter 1 et dans l'épaisseur de la plaque de fermeture 5 ; c) figure 4C : le circuit du liquide de refroidissement est formé seulement dans l'épaisseur de la plaque de fermeture 5 ; d) figure 4D : le circuit du liquide de refroidissement est constitué par un noyau d'eau 4a intégré dans la masse du carter
4 ; e) figure 4E : le circuit du liquide de refroidissement est constitué par un noyau d'eau 5a intégré dans l'épaisseur de la plaque de fermeture 5.

En résumé, l'échangeur est intégré à la fonderie du carter et à la plaque de fermeture en formant un réseau faisant circuler le liquide de refroidissement provenant du circuit d'eau des moteurs du véhicule. Cette plaque, avec ou sans ailettes, est au contact de l'huile qui circule grâce à la dynamique créée par le différentiel dans le volume d'huile de la boîte.

En conclusion, le principal avantage de l'invention est sa simplicité, et son faible coût de réalisation, grâce à l'absence de circuit de circuit d'huile à l'extérieur de la boîte de vitesses.

## Revendications

1. Dispositif de contrôle thermique de boîte de vitesses (1) à lubrification par barbotage et projection d'huile dans son carter (4), comprenant une boîte de vitesse munie
un échangeur thermique par convection (2) disposé à l'intérieur de la boîte (1), qui assure un transfert de calories entre l'huile s'écoulant par gravité dans celle-ci sans circulation forcée, et le liquide de refroidissement du groupe motopropulseur auquel appartient la boîte de vitesses (1), l'échangeur (2) étant implanté directement dans la fonte d'un élément de carter (4) de la boîte
en formant dans celle-ci un réseau de circulation pour le liquide de refroidissement, qui assure un transfert de calories entre l'huile s'écoulant par gravité dans celle-ci sans circulation forcée, et le liquide de refroidissement du groupe motopropulseur,
**caracterisé en ce que** l'échangeur thermique par convection (2) est composé d'un circuit d'eau intégré à la fonderie du carter (4) et d'une plaque de fermeture (5), rapportée sur une face intérieure du carter (4) de la boîte (1), qui referme l'échangeur, de sorte que le transfert de calories entre le liquide de refroidissement et l'huile, s'effectue principalement au travers de la plaque de fermeture (5).

2. Dispositif de contrôle thermique de boîte de vitesses (1) selon la revendication 1, **caractérisé en ce qu'**il dispose d'une surface d'échange thermique maximisée à l'aide d'ailettes (6) disposées dans le flux d'huile.

3. Dispositif de contrôle thermique de boîte de vitesses (1) selon la revendication 1 ou 2, **caractérisé en ce que** le circuit du liquide de refroidissement est formé dans la masse du carter (4), et fermé par la plaque de fermeture (5).

4. Dispositif de contrôle thermique de boîte de vitesses selon la revendication 1 ou 2, **caractérisé en ce que** le circuit du liquide de refroidissement est formé dans la masse du carter (4) et dans l'épaisseur de la plaque de fermeture (5).

5. Dispositif de contrôle thermique de boîte de vitesses selon la revendication 1 ou 2, **caractérisé en ce que** le circuit du liquide de refroidissement est formé seulement dans l'épaisseur de la plaque de fermeture (5).

6. Dispositif de contrôle thermique de boîte de vitesses (1) selon la revendication 1 ou 2, **caractérisé en ce que** le circuit du liquide de refroidissement est constitué par un noyau d'eau (4a) intégré dans la masse du carter (4).

7. Dispositif de contrôle thermique de boîte de vitesses (1) selon l'une des revendications 1 ou 2, **caractérisé en ce que** le circuit du liquide de refroidissement est constitué par un noyau d'eau (5a) intégré dans l'épaisseur de la plaque de fermeture (5).

8. Dispositif de contrôle thermique de boîte de vitesses selon l'une des revendications 3, 4 ou 5, **caractérisé en ce que** la plaque de fermeture (5) présente un logement (3) apte à recevoir un aimant de captation des particules métalliques véhiculées par l'huile de la boîte (1).

9. Procédé de contrôle thermique de boîte de vitesses (1) à lubrification par barbotage et projection d'huile dans son carter (4), **caractérisé en ce qu'**il repose sur des échanges thermiques convectifs réalisés à l'intérieur de la boîte (1) entre l'huile s'écoulant par gravité dans celle-ci sans circulation forcée, et un liquide de refroidissement externe, au sein d'un dispositif de contrôle thermique de boîte de vitesses conforme à l'une des revendications précédentes.

10. Procédé de contrôle thermique de boîte de vitesses (1) selon la revendication 9, **caractérisé en ce que** le transfert de calories entre le liquide de refroidissement et l'huile, s'effectue principalement au travers d'une plaque de fermeture (5) rapportée sur une face intérieure du carter (4) de la boîte de vitesses (1).

## Patentansprüche

1. Vorrichtung zur Temperaturregelung eines Getriebes (1) mit Tauchschmierung und Öleinspritzen in dessen Gehäuse (4), umfassend ein Getriebe, das mit einem Konvektionswärmetauscher (2) ausgestattet ist, der im Inneren des Getriebes (1) angeordnet ist, dass einen Wärmeaustausch zwischen dem durch Schwerkraft in das Getriebe fließenden Öl ohne Zwangsumwälzung und der Kühlflüssigkeit des Antriebsstrangs, zu dem das Getriebe gehört (1) gewährleistet, wobei der Wärmetauscher (2) direkt in das Gusseisen eines Gehäuseelements (4) des Getriebes eingesetzt ist, und darin ein Zirkulationsnetz für die Kühlflüssigkeit bildet, das einen Wärmeaustausch zwischen dem Öl, das ohne Zwangsumwälzung durch die Schwerkraft darin fließt, und der Kühlflüssigkeit des Antriebsstrangs gewährleistet,
**dadurch gekennzeichnet, dass** der Konvektionswärmetauscher (2) aus einem in das Gehäuse (4) integrierten Wasserkreislauf und einer an einer Innenseite des Gehäuses (4) des Getriebes (1) angeordneten Verschlussplatte (5) besteht, die den Wärmetauscher verschließt, sodass der Wärmeaustausch zwischen der Kühlflüssigkeit und dem Öl hauptsächlich durch die Verschlussplatte (5) erfolgt.

2. Vorrichtung zur Temperaturregelung eines Getriebes (1) nach Anspruch 1, **dadurch gekennzeichnet, dass** sie über eine mithilfe von im Ölstrom angeordneten Lamellen (6) maximierte Wärmeaustauschfläche verfügt.

3. Vorrichtung zur Temperaturregelung eines Getriebes (1) nach Anspruch 1 oder 2, **dadurch gekennzeichnet, dass** der Kühlflüssigkeitskreislauf in der Masse des Gehäuses (4) ausgebildet und durch die Verschlussplatte (5) geschlossen ist.

4. Vorrichtung zur Temperaturregelung eines Getriebes nach Anspruch 1 oder 2, **dadurch gekennzeichnet, dass** der Kühlflüssigkeitskreislauf in der Masse des Gehäuses (4) und in der Dicke der Verschlussplatte (5) ausgebildet ist.

5. Vorrichtung zur Temperaturregelung eines Getriebes nach Anspruch 1 oder 2, **dadurch gekennzeichnet, dass** der Kühlflüssigkeitskreislauf nur in der Dicke der Verschlussplatte (5) ausgebildet ist.

6. Vorrichtung zur Temperaturregelung eines Getriebes (1) nach Anspruch 1 oder 2, **dadurch gekennzeichnet, dass** der Kühlflüssigkeitskreislauf aus einem Wasserkern (4a) besteht, der in die Masse des Gehäuses (4) integriert ist.

7. Vorrichtung zur Temperaturregelung eines Getriebes (1) nach Anspruch 1 oder 2, **dadurch gekennzeichnet, dass** der Kühlflüssigkeitskreislauf aus einem Wasserkern (5a) besteht, der in die Dicke der Verschlussplatte (5) integriert ist.

8. Vorrichtung zur Temperaturregelung eines Getriebes nach einem der Ansprüche 3, 4 oder 5, **dadurch gekennzeichnet, dass** die Verschlussplatte (5) eine Aufnahme (3) aufweist, die einen Magneten zum Auffangen der vom Öl des Getriebes (1) mitgeführten Metallpartikel aufnehmen kann.

9. Verfahren zur Temperaturregelung eines Getriebes (1) mit Tauchschmierung und Ölspritzen in dessen Gehäuse (4), **dadurch gekennzeichnet, dass** es auf konvektiven Wärmetauschen beruht, die im Getriebe (1) zwischen dem durch Schwerkraft darin fließenden Öl ohne Zwangsumwälzung und einer externen Kühlflüssigkeit innerhalb einer Vorrichtung zur Temperaturregelung eines Getriebes gemäß einem der vorhergehenden Ansprüche stattfinden.

10. Verfahren zur Temperaturregelung eines Getriebes (1) nach Anspruch 9, **dadurch gekennzeichnet, dass** der Wärmeaustausch zwischen der Kühlflüssigkeit und dem Öl hauptsächlich über eine Verschlussplatte (5) erfolgt, die an einer Innenseite des Gehäuses (4) des Getriebes (1) angeordnet ist.

## Claims

1. A thermal control device for a gearbox (1) lubricated by splash lubrication and oil spraying in its housing (4), the device comprising a gearbox provided with a convection heat exchanger (2) arranged inside the gearbox (1), which ensures heat transfer between the oil flowing therein by gravity without forced circulation and the cooling liquid of the power unit to which the gearbox (1) belongs, the exchanger (2) being directly integrated into the casting of an element of the gearbox housing (4), forming therein a circulation network for the cooling liquid, which ensures heat transfer between the oil flowing therein by gravity without forced circulation and the cooling liquid of the power unit,
**characterised in that** the convection heat exchanger (2) comprises a water circuit integrated into the casting of the housing (4) and a closing plate (5) attached to an internal face of the housing (4) of the gearbox (1), the closing plate enclosing the exchanger, such that the heat transfer between the cooling liquid and the oil takes place mainly through the closing plate (5).

2. The thermal control device for a gearbox (1) according to claim 1, **characterised in that** it comprises a heat exchange surface maximised by means of fins (6) arranged in the oil flow.

3. The thermal control device for a gearbox (1) according to claim 1 or 2, **characterised in that** the cooling liquid circuit is formed in the body of the housing (4), and is closed by the closing plate (5).

4. The thermal control device for a gearbox according to claim 1 or 2, **characterised in that** the cooling liquid circuit is formed in the body of the housing (4) and in the thickness of the closing plate (5).

5. The thermal control device for a gearbox according to claim 1 or 2, **characterised in that** the cooling liquid circuit is formed only in the thickness of the closing plate (5).

6. The thermal control device for a gearbox (1) according to claim 1 or 2, **characterised in that** the cooling liquid circuit is constituted by a water core (4a) integrated into the body of the housing (4).

7. The thermal control device for a gearbox (1) according to one of claims 1 or 2, **characterised in that** the cooling liquid circuit is constituted by a water core (5a) integrated into the thickness of the closing plate (5).

8. The thermal control device for a gearbox according to one of claims 3, 4 or 5, **characterised in that** the closing plate (5) comprises a recess (3) suitable for receiving a magnet for capturing metallic particles carried by the gearbox (1) oil.

9. A method for thermally controlling a gearbox (1) lubricated by splash lubrication and oil spraying in its housing (4), **characterised in that** convective heat exchange is carried out inside the gearbox (1) between the oil flowing therein by gravity without forced circulation and an external cooling liquid, within a thermal control device for a gearbox according to one of the preceding claims.

10. The method for thermally controlling a gearbox (1) according to claim 9, **characterised in that** the heat transfer between the cooling liquid and the oil takes place mainly through a closing plate (5) attached to an internal face of the housing (4) of the gearbox (1).
